# EUROPEAN PATENT SPECIFICATION

(11) **EP 3 499 940 B1**
(45) Date of publication and mention of the grant of the patent: **06.09.2023**
(21) Application number: 17854940.8
(22) Date of filing: 28.09.2017
(51) Int. Cl.: H04W 72/23, H04W 84/12, H04W 72/0453

(54) **DATA TRANSMISSION METHOD AND RELEVANT DEVICE**
DATENÜBERTRAGUNGSVERFAHREN UND ZUGEHÖRIGE VORRICHTUNG
PROCÉDÉ DE TRANSMISSION DE DONNÉES ET DISPOSITIF PERTINENT

(30) Priority: 30.09.2016 CN 201610873170
(43) Date of publication of application: 19.06.2019
(73) Proprietor: Huawei Technologies Co., Ltd., Longgang District Shenzhen, Guangdong 518129 (CN)
(72) Inventor: LI, Yanchun, Shenzhen, Guangdong 518129 (CN); LI, Yunbo, Shenzhen, Guangdong 518129 (CN)
(74) Representative: Gill Jennings & Every LLP
(86) International application number: PCT/CN2017/103999
(87) International publication number: WO 2018/059490

(56) References cited:
- WO-A1-2006/000955
- CN-A- 102 469 470
- CN-A- 104 185 297
- US-A1- 2013 077 654
- ERICSSON: "Work Item on Licensed-Assisted Access to Unlicensed Spectrum", 3GPP DRAFT; RP-152233, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Sitges, Spain; 20151207 - 20151210 10 December 2015 (2015-12-10), XP051656563, Retrieved from the Internet: URL:http://www.3gpp.org/ftp/tsg%5Fran/TSG% 5FRAN/TSGR%5F70/Docs/RP%2D152233%2Ezip [retrieved on 2015-12-10]

## Description

### TECHNICAL FIELD

The present application relates to the field of communications technologies, and in particular, to a data transmission method, a station and an access point.

### BACKGROUND

Wi-Fi technology is a short range wireless communications technology. A basic standard of the Wi-Fi technology is the 802.11 protocol stipulated by IEEE. A common structure of the Wi-Fi technology includes a central node, referred to as an access point (Access Point, AP). The access point periodically sends a beacon (beacon) frame to announce the existence of a network to the outside world. Another node, referred to as a station (Station, STA), proactively sends a probe request (probe request), receives a probe response (probe response) or passively receives the beacon (beacon) frame and thereby knows the existence of the AP, and performs message exchange with the AP to join the network of the AP. A network formed by the AP and the STA is referred to as a BSS (basic service set, basic service set). The BSS includes an AP device and a STA device that establishes a connection with the AP.

In the existing Wi-Fi technology, data and control information are transmitted by using a same channel. The control information has a relatively high priority, but a size of data is usually far greater than a size of the control information. Consequently, the control information probably cannot be sent out in a timely manner. When an AP needs to allocate a channel resource to a station based on the control information, if the control information cannot be sent out in a timely manner, resources are wasted.

WO 2006/000955 relates to a method for signalling the status of a subcarrier in a multicarrier network and a method for adaptively allocating the subcarriers in a multicarrier network.

ERICSSON: "Work Item on Licensed-Assisted Access to Unlicensed Spectrum", 3GPP DRAFT; RP-152233, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE vol. TSG RAN, no. Sitges, Spain; 20151207-20151210 10 December 2015 (2015-12-10), relates to Licensed-Assisted Access to Unlicensed Spectrum.

### SUMMARY

Aspects of the present application provide a data transmission method and a related device and system, to improve resource utilization.

Various aspects of the present disclosure have been defined in the independent claims. Further technical features of each of these aspects have been defined in the respective dependent claims.

Based on certain principles disclosed in the present disclosure, the first frame from the AP may include data of the STA. An information amount of control information is less than an information amount of data, and therefore the control information requires a relatively small bandwidth, and a relatively large quantity of orthogonal channels can be provided in a dense network, to isolate a collision on a control channel. It can be learned that transmitting the data and the control information on different channels can avoid a problem that the control information cannot be sent out in a timely manner, thereby improving resource utilization. In addition, when some channels are busy, the AP can indicate, by using the transmission indication, that the data is to be sent on an idle channel, further improving resource utilization.

Based on certain principles disclosed in the present disclosure, it can be learned that the STA can perform control channel search based on the characteristic information of the control channel. This can narrow a control channel search range, and reduces a large amount of time and power that the STA spends on scanning and searching a channel. The AP may use one or more first channels with different frequencies. To improve reliability, the AP may use a plurality of first channels, and correspondingly, the second frame sent by the AP may include an indication of the plurality of first channels. The third channel may be a channel the same as or different from the second channel.

### BRIEF DESCRIPTION OF DRAWINGS

To describe the technical solutions in the aspects of the present application more clearly, the following briefly describes the accompanying drawings required for describing the aspects or the prior art. Apparently, the accompanying drawings in the following description show merely some aspects of the present application, and a person of ordinary skill in the art may still derive other drawings from these accompanying drawings without creative efforts.
FIG 1 is a schematic diagram of a communications system according to a non-claimed aspect of the present application;
FIG. 2 is a schematic flow chart of a data transmission method according to a first aspect of the present application;
FIG. 3 is a schematic diagram of a channel according to an aspect of the present application; and
FIG. 4 is a schematic flow chart of a data transmission method according to a non-claimed aspect of the present application;
FIG 5 is a schematic structural diagram of a station according to an aspect of the present application;
FIG 6 is a schematic structural diagram of an access point according to an aspect of the present application; and
FIG. 7 is a schematic structural diagram of a computer device according to an aspect of the present application.

### DESCRIPTION OF ASPECTS

To make the objectives, technical solutions, and advantages of this disclosure clearer, the following further describes the implementations of this disclosure in detail with reference to the accompanying drawings. The implementations described below are not all claimed, they are included to help understanding the context of the invention. While the description often refers to embodiments, the embodiments of the invention are those which comprise at least all the features of an independent claim. Any embodiment which does not fall within the scope of the claims does not form part of the invention, but rather included as an illustrative example that is useful for understanding the invention.

Details are separately described in the following.

In the specification, claims, and accompanying drawings of the present application, the terms "first", "second", "third", "fourth", and so on are intended to distinguish between different objects but do not indicate a particular order. Moreover, the terms "including", "comprising", and any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"An aspect" mentioned in the specification indicates that a particular characteristic, structure or property that is related to the aspect may be included in at least one aspect of the present application. The phrase occurred at different locations in the specification does not necessarily refer to a same aspect, nor an independent or alternate aspect exclusive of another aspect. A person skilled in the art understands, in explicit and implicit manners, that an aspect described in this application may be combined with another aspect.

In the following, some terms in this application are described, so as to help a person skilled in the art have a better understanding.
1. A control channel (Control Channel, CCH) is a channel used to provide a data reception or sending indication. A data channel is a channel used to carry data.
2. A STA is a terminal connected to a wireless network, for example, a handheld device or an in-vehicle device with a wireless connection function. A common terminal includes, for example, a mobile phone, a tablet computer, a notebook computer, a palmtop computer, a mobile Internet device (mobile internet device, MID), or a wearable device such as a smartwatch, a smart band, or a pedometer.
3. An AP is usually translated into a "wireless access point" or a "bridge". The AP mainly serves as a bridge between a wireless station and a wired local area network at a Media Access Control (MAC) layer.
4. A channel frequency is a frequency of a signal that passes through the channel.
5. A channel bandwidth is a signal spectrum width, to be specific, a difference between a highest signal frequency component and a lowest signal frequency component.
6. A spatial stream is a signal generated when a signal transmitted by radio is reflected in a multiple-input multiple-output technology.
7. A beacon (beacon) frame is a frame used to send a beacon by a primary coordinator in a personal area network (Personal Area Network, PAN).
8. A trigger frame is a frame used when a primary node queries, at a frame interval, whether a signal of each secondary node changes.
9. "A plurality of" means two or more. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects.

The following describes the aspects of this application with reference to the accompanying drawings.

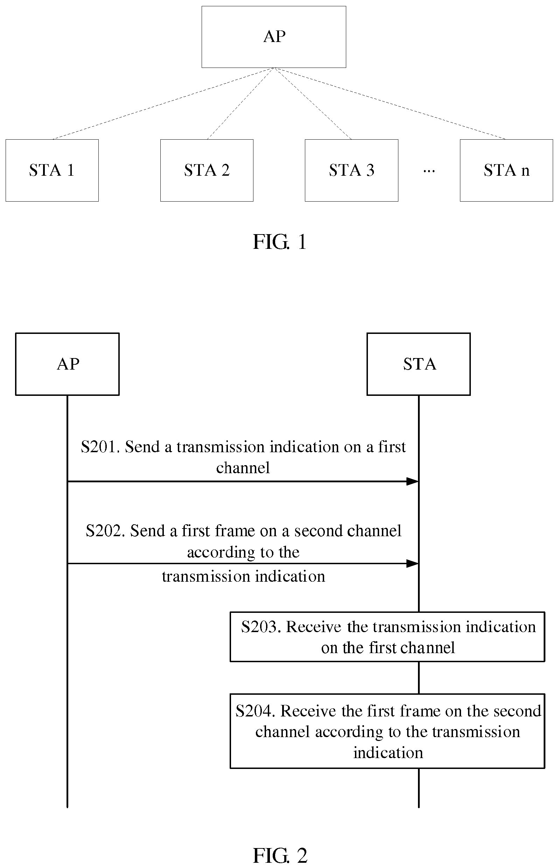

Referring to FIG 1, FIG. 1 is a schematic diagram of a communications system disclosed in an aspect of the present application. The communications system shown in FIG 1 includes a plurality of STAs (such as a STA 1, a STA 2, a STA 3, ..., and a STA n) and an AP. The AP sends a transmission indication on a first channel. The transmission indication is used to indicate that a first frame is transmitted on a second channel. The transmission indication includes transmission information of the first frame. The transmission information of the first frame includes at least one of a channel frequency, a channel bandwidth, spatial stream information, or a transmission time. Then, the AP sends the first frame on the second channel according to the transmission indication. Later, the STA receives, on a first channel, the transmission indication from the AP, and performs listening on the second channel according to the transmission indication, to receive the first frame from the AP. It can be learned that transmitting data and control information on different channels can avoid a problem that the control information cannot be sent out in a timely manner, thereby improving resource utilization. In addition, when some channels are busy, the AP can indicate, by using the transmission indication, that the data is to be sent on an idle channel, further improving resource utilization.

Referring to FIG 2, FIG 2 is a schematic flow chart of a data transmission method according to an aspect of the present application. The method includes the following steps.

S201. An AP sends a transmission indication on a first channel, where the transmission indication is used to indicate that a first frame is transmitted on a second channel, the transmission indication includes transmission information of the first frame, and the transmission information of the first frame includes at least one of a channel frequency, a channel bandwidth, spatial stream information, or a transmission time. The spatial stream information may include AP signal spatial direction information or a spatial stream quantity. Optionally, the transmission indication further includes at least one of a STA identifier, a multicast identifier, or a broadcast identifier.

S202. The AP sends the first frame on the second channel according to the transmission indication.

S203. A STA receives, on the first channel, the transmission indication from the AP.

S204. The STA performs listening on the second channel according to the transmission indication, to receive the first frame from the AP.

It should be noted that the first channel and the second channel are different channels, for example, the first channel is a control channel and the second channel is a data channel.

In an illustrative example not claimed, the first channel and the second channel may be a same channel, for example, both the first channel and the second channel are a control channel or both the first channel and the second channel are a data channel.

Optionally, the first frame includes a data frame, a management frame, a control frame, or a trigger frame.

For example, when the transmission indication includes a channel frequency, the STA performs listening on a channel including the channel frequency, to receive the first frame from the AP; when the transmission indication includes a channel bandwidth, the STA sets a receive/transmit channel bandwidth to be greater than or equal to the bandwidth, to receive the first frame from the AP; or when the transmission indication includes spatial stream information, the STA uses a receive/transmit RF chain whose quantity is greater than or equal to that of spatial streams included in the spatial stream information, to receive the first frame from the AP.

When the STA performs listening on the first channel, the STA turns off listening on the second channel, so as to reduce power consumed on the second channel. Optionally, the STA may enable an antenna and an RF chain (a power amplifier PA, a low noise amplifier LNA, an analog-to-digital converter ADC, a digital-to-analog converter DAC, or the like) based on the spatial stream information. For example, if the AP indicates two spatial streams to the STA, the STA enables two RF chains, and no more than two spatial streams are from the AP to the STA on the second channel.

Optionally, the present application may be further applied to a system requiring beamforming (Beamforming). The first frame may include AP transmit sector sweep information, and correspondingly, a transmission time in the transmission indication includes at least one piece of information of a starting time, duration, or an end time of AP transmit sector sweep. The transmission indication may include a quantity of sectors in the AP transmit sector sweep, or/and AP receive RF chain quantity information.

Optionally, the transmission indication may include an AP-probed STA transmit sector sweep time. The transmission indication may include a field to indicate that the time is used for an AP transmit sector sweep (Transmit Sector Sweep) or the AP-probed STA transmit sector sweep time. After the AP detects a STA transmit sector sweep, the AP sends a sector sweep feedback (Sector Sweep Feedback). The AP may transmit the sector sweep feedback by using the first channel. The sector sweep feedback may carry best quality sector information, such as a sector identifier/number. The transmit sector sweep is that a sender (the AP or the STA) sends a beamforming training signal in one or more directions. The transmission indication may include a quantity of sectors in AP transmit sector sweep, or/and AP receive RF chain quantity information. In the foregoing manner, sending may be performed by using the first channel before a forward link and a reverse link are established on the second channel, so as to reduce a sending time.

In an illustrative example not claimed, when the first channel and the second channel are a same channel, and the first frame is data, duration for transmitting the first frame on the second channel is less than or equal to specified duration. To be specific, the data and the control information can be transmitted on a same channel, but to avoid that the data occupies the channel for a very long time, the duration for transmitting the data on the channel needs to be limited and should not exceed the specified duration. This can avoid a problem that the control information cannot be sent out in a timely manner, thereby improving resource utilization.

Optionally, before step S201 in which the AP sends the transmission indication on the first channel, the method further includes: The AP sends a second frame on a third channel, where the second frame includes an indication of the first channel, the indication of the first channel includes characteristic information of the first channel, and the characteristic information of the first channel includes at least one of frequency of the first channel, bandwidth of the first channel, a sending time, a modulation scheme, a frame format, a protocol version, or a time period of the first channel; the AP sends the transmission indication on the first channel based on the characteristic information of the first channel; and subsequently, the STA performs listening on the third channel, to receive the second frame from the AP, and the STA receives, on the first channel based on the characteristic information of the first channel, the transmission indication from the AP.

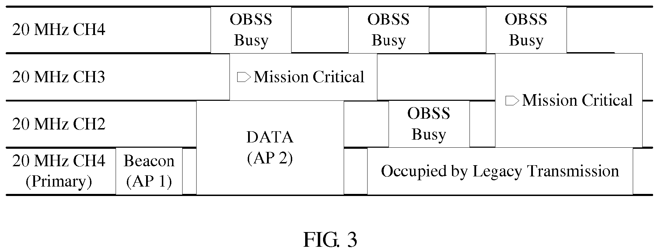

Optionally, the third channel may be or may not be a same channel as the second channel. No limitation is imposed in the present application. For example, as shown in FIG 3, the first frame may be transmitted on a 20 MHz CH3, the second frame may be transmitted on a 20 MHz CH1, or both the first frame and the second frame are transmitted on a 20 MHz CH3 .

For example, it is assumed that the first channel is a control channel, the second channel is a data channel, and the second frame is a beacon frame. The control channel occupies a small bandwidth, and therefore more control channels are available to be used as control channels of the AP. In frequency domain, the STA can directly search for a control channel. In this case, the STA needs to perform a large quantity of switching operations between channels for scanning and searching, and thereby a large amount of time and power may be consumed. In this solution, the STA may first perform data channel search, to receive a beacon frame from the AP on a data channel. The beacon frame includes an indication of a control channel, and the indication of the control channel includes characteristic information of the control channel. The STA performs control channel search based on the characteristic information of the control channel. This can narrow a control channel search range, and reduces a large amount of time and power that the STA spends on scanning and searching a channel.

The AP may use one or more first channels with different frequencies. To improve reliability, the AP may use a plurality of first channels, and correspondingly, the second frame from the AP may include an indication of the plurality of first channels. The third channel may be a channel the same as or different from the second channel.

Optionally, the first frame is a trigger frame, the trigger frame includes an uplink transmission parameter, and after step S204 in which the STA performs listening on the second channel according to the transmission indication, to receive the first frame from the AP, the STA performs uplink transmission based on the uplink transmission parameter. The uplink transmission parameter includes at least one of a frequency, a bandwidth, a subchannel, a subcarrier, a time, a modulation and coding scheme, a MIMO spatial stream, or pilot resource information.

Optionally, before step S201 in which the AP sends the transmission indication on the first channel, the AP sends a third frame on the second channel, and the STA performs listening on the second channel, to receive the third frame from the AP; and the STA sends a fourth frame to the AP on the second channel corresponding to the third frame, the AP receives the fourth frame from the STA on the second channel corresponding to the third frame, and the AP sends the transmission indication on the first channel based on a sending mode of the transmission indication. The fourth frame includes the sending mode for sending the transmission indication. The sending mode of the transmission indication includes: sending the transmission indication on the first channel and/or sending the transmission indication on the second channel.

The sending mode of the transmission indication that the STA can support includes at least two of the following plurality of modes: Sending mode 1: The STA may depend only on a data channel to send the transmission indication and do not use a control channel, that is, the AP sends the transmission indication only on the data channel; sending mode 2: The STA needs to depend on a control channel to send the transmission indication, that is, the AP sends the transmission indication only on the control channel; sending mode 3: The AP may send the transmission indication simultaneously on a data channel and a control channel, that is, the AP may send the transmission indication on the data channel at the same time when sending the transmission indication on the control channel.

For example, it is assumed that the second channel is a data channel. During initial access, the STA performs listening on the data channel, to receive the third frame from the AP (where the third frame may be, for example, a beacon frame or a probe response frame). Then, the STA sends the fourth frame (where the fourth frame may be, for example, an association request frame or a reply frame in response to the third frame), and the STA indicates, in the fourth frame, the sending mode of the transmission indication supported by the STA. The AP performs data transmission for the STA based on the sending mode of the transmission indication indicated by the STA.

Optionally, the first frame includes transmission information of a fifth frame, the transmission information of the fifth frame includes at least one of a channel frequency, a channel bandwidth, spatial stream information, or a transmission time, and after step S202 in which the AP sends the first frame on the second channel according to the transmission indication, the AP sends the fifth frame on the second channel based on the transmission information of the fifth frame, and the STA performs listening on the second channel based on the transmission information of the fifth frame, to obtain the fifth frame.

Further, the AP may add network allocation vector (Network Allocation Vector, NAV) information to the first frame or a frame earlier than the first frame.

The transmission indication may further include a STA ID, a STA group ID, channel frequency information, or a channel number, or a specific implementation of performing, by the STA, listening on the second channel according to the transmission indication includes: when the transmission indication meets a preset condition, performing, by the STA, listening on the second channel according to the transmission indication.

The preset condition may be: An ID of the STA is the same as the STA ID in the the transmission indication; or the STA belongs to a STA group corresponding to the STA group ID in the transmission indication; or a preset channel of the STA is the same as a channel pre-negotiated by the STA and the AP; or an indicated channel/bandwidth includes a preset channel of the STA and a channel/bandwidth pre-negotiated by the STA and the AP.

Optionally, before step S202 in which the AP sends the first frame on the second channel according to the transmission indication, the AP sends a sixth frame on the second channel, where the sixth frame is used to query a channel bandwidth available to the STA; the STA performs listening on the second channel, to receive the sixth frame from the AP; the STA sends a seventh frame to the AP on the second channel corresponding to the sixth frame, where the seventh frame is used to return the channel bandwidth available to the STA; the AP receives the seventh frame from the STA to the AP on the second channel corresponding to the sixth frame; and the AP sends, according to the transmission indication, the first frame on the channel bandwidth available to the STA.

For example, it is assumed that the first channel is a control channel, and the second channel is a data channel. The AP first sends the transmission indication on the control channel, and then the AP sends the sixth frame on the data channel. After the AP receives the seventh frame from the STA on the data channel corresponding to the sixth frame, the AP sends the first frame on the data channel. The seventh frame may be an acknowledgement that the STA receives the sixth frame, or may be a response of the sixth frame. For example, the AP queries, in the sixth frame, a channel bandwidth available to a user, and the STA returns, in the seventh frame, the channel bandwidth available to the STA, so that the AP transmits data to the STA on a channel available to the STA or on a better channel. When the STA receives the transmission indication from the AP, the STA first determines whether content of the transmission indication meets the preset condition, and if the content of the transmission indication meets the preset condition, the STA performs listening on the data channel, to receive the sixth frame from the AP. For a specific implementation of determining, by the STA, whether the content of the transmission indication meets the preset condition, reference may be made to the foregoing method description, and details are not described herein again.

In an illustrative example not claimed, the first channel and the second channel are a same channel, and when the AP detects, on a channel used by the AP, a frame from another AP, the AP restricts a type of a frame that is sent on the channel used by the AP.

For example, it is assumed that both the first channel and the second channel are a control channel. When the AP detects, on a control channel used by the AP, a frame sent by another AP, the AP restricts a type of the frame that is sent by the another AP on the control channel used by the AP. For example, the AP may restrict that the another AP performs only control frame transmission on the control channel, or restrict that the another AP performs transmission of only a control frame and a specified type of data packet on the control channel.

In an illustrative example not claimed, the first channel and the second channel are a same channel, and that duration for transmitting the first frame on the second channel is less than or equal to specified duration includes: Duration for occupying the second channel by the first frame in a single physical transmission is less than or equal to first specified duration, and duration for occupying the second channel by the first frame in a single transmission is less than or equal to second specified duration. The second specified duration is greater than the first specified duration.

The single physical transmission means that one Physical Layer protocol data unit (Physical Layer Protocol Data Unit, PPDU) is transmitted. The single transmission means one transmission opportunity (Transmission Opportunity, TXOP). A plurality of PPDUs can be sent during one TXOP.

When the second specified duration is greater than the first specified duration, if an overlapping basic service set (Overlapping Basic Service Set, OBSS) has higher priority of data to be transmitted, sending a plurality of PPDUs during one TXOP may be interrupted. For example, there should be an interval between two PPDU transmissions, and the interval may include one or more listening timeslots for listening. A quantity of the listening timeslots is a listening timeslot quantity 2. A quantity of listening timeslots before single channel occupation is a listening timeslot quantity 1. The listening timeslot quantity 2 is less than the listening timeslot quantity 1 or an expected value of the listening timeslot quantity 1. The high priority of data and a control frame of the OBSS have a short waiting time and are sent earlier than a current BSS. The current BSS gives up the TXOP if the current BSS finds that the OBSS performs sending, causing an interruption.

The second specified duration is greater than the first specified duration. Although a stated total time of channel occupation is longer, high priority of data will not wait a very long time because transmission of a plurality of PPDUs in a TXOP can be interrupted.

A first frequency sub-band of the channel used by the AP and a second frequency sub-band of a channel used by the another AP belong to a same frequency band range.

For example, if the AP finds that the another AP is using a 2 MHz channel in a first 20 MHz (2420 to 2440 MHz) frequency band to transmit control information, the AP may use another 2 MHz channel in the frequency band to transmit control information. Frequencies used by the AP and the another AP may be different, to avoid mutual interference. A data bandwidth is 20 MHz. If the AP and the another AP choose a frequency band randomly, 2 MHz channels used by the AP and the another AP disperse, and many frequency bands that may be used as a complete data channel are partially occupied, resulting in low channel utilization.

The AP may indicate one or more control channels to a plurality of STAs. The AP may indicate different control channels to the plurality of STAs. When there are a plurality of control channels, control channel characteristic information used for these control channels differs. For example, frequency information of these control channels is different. Therefore, after the AP indicates, to the STA 1, frequency information 1 of a control channel, and the AP indicates, to the STA 2, frequency information 2 of a control channel, when the AP sends a packet on a control channel with the frequency information 1, the AP does not trigger the STA 2 to receive the packet. This can save STA power.

In can be learned that in this aspect of the present application, the STA receives, on the first channel, the transmission indication from the AP, where the transmission indication is used to indicate that the first frame is transmitted on the second channel, the transmission indication includes the transmission information of the first frame, and the transmission information of the first frame includes at least one of a channel frequency, a channel bandwidth, spatial stream information, or a transmission time; and the STA performs listening on the second channel according to the transmission indication, to receive the first frame from the AP. It can be learned that transmitting data and control information on different channels can avoid a problem that the control information cannot be sent out in a timely manner, thereby improving resource utilization. In addition, when some channels are busy, the AP can indicate, by using the transmission indication, that the data is to be sent on an idle channel, further improving resource utilization.

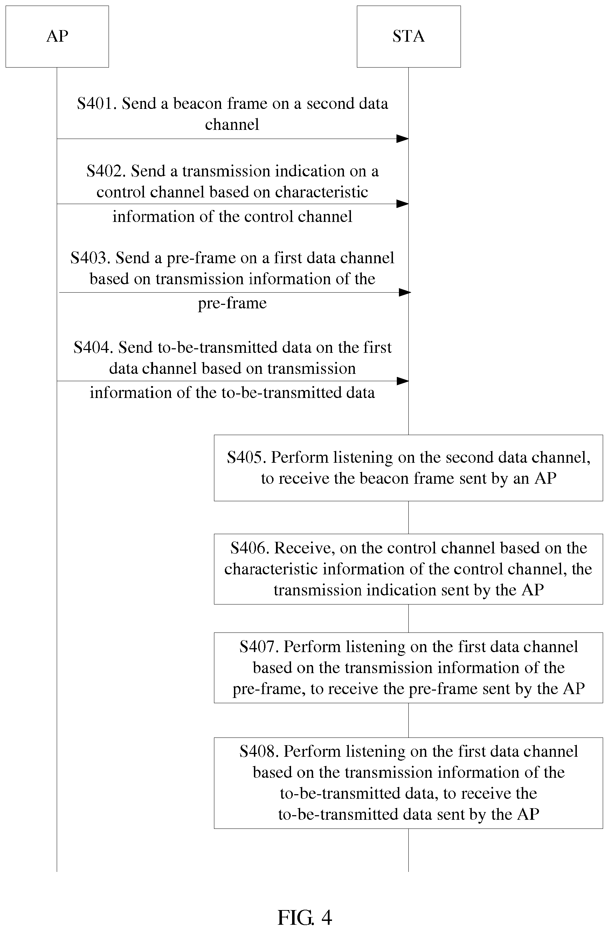

A specific implementation of the method is now described with reference to FIG 3 and FIG 4.

In this implementation, the first channel is a control channel, the second channel is a first data channel, and the third channel is a second data channel.

As shown in FIG 3, the first data channel may be a 20 MHz CH3, the second data channel may be a 20 MHz CH3, the second frame is a beacon frame, the fifth frame is to-be-transmitted data, and the first frame is a pre-frame earlier than the fifth frame. As shown in FIG 4, the method procedure includes the following steps.

S401. An AP sends a beacon frame on a second data channel, where the beacon frame comprises an indication of a control channel, the indication of the control channel includes characteristic information of the control channel, and the characteristic information of the control channel includes at least one of frequency information, bandwidth information, a sending time, a modulation scheme, a frame format, a protocol version, or a time period of the control channel.

S402. The AP sends a transmission indication on the control channel based on the characteristic information of the control channel, where the transmission indication is used to indicate that a first frame is transmitted on a second channel, the transmission indication includes transmission information of the first frame, and the transmission information of the first frame includes at least one of a channel frequency, a channel bandwidth, spatial stream information, or a transmission time.

S403. The AP sends the pre-frame on the first data channel based on the transmission information of the pre-frame, where the pre-frame includes transmission information of to-be-transmitted data, and the transmission information of the to-be-transmitted data includes at least one of a channel frequency, a channel bandwidth, spatial stream information, or a transmission time.

S404. The AP sends the to-be-transmitted data on the first data channel based on the transmission information of the to-be-transmitted data.

S405. A STA performs listening on the second data channel, to receive the beacon frame from the AP.

S406. The STA receives, on the control channel based on the characteristic information of the control channel, the transmission indication from the AP.

S407. The STA performs listening on the first data channel based on the transmission information of the pre-frame, to receive the pre-frame from the AP.

S408. The STA performs listening on the first data channel based on the transmission information of the to-be-transmitted data, to receive the to-be-transmitted data from the AP.

It should be noted that, for a specific implementation process of each step in the method shown in FIG 4, reference may be made to the specific implementation process in the foregoing method, and details are not described herein again. In addition, an execution order of steps S401 to S408 shown in FIG 4 is not limited to the execution order shown in FIG 4. For example, step S405 may be performed after step S401.

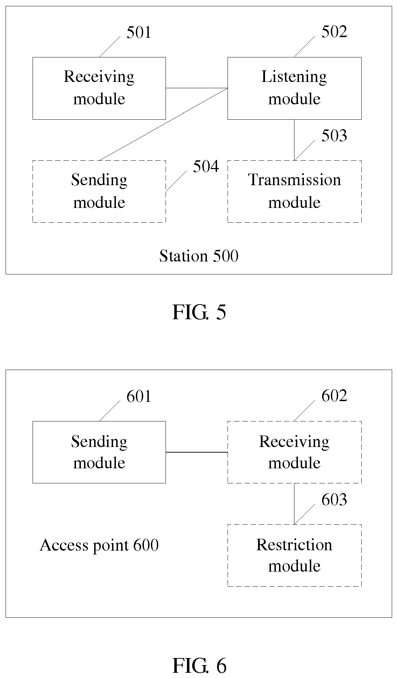

An aspect of the present application further provides a station (STA) 500. As shown in FIG 5, the STA 500 includes:
a receiving module 501, configured to receive, on a first channel, a transmission indication from an access point (AP), where the transmission indication is used to indicate that a first frame is transmitted on a second channel, the transmission indication includes transmission information of the first frame, and the transmission information of the first frame includes at least one of a channel frequency, a channel bandwidth, spatial stream information, or a transmission time; and
a listening module 502, configured to perform listening on the second channel according to the transmission indication, to receive the first frame from the AP;
wherein the first channel and the second channel are different channels and wherein the listening module is further configured to, when performing listening on the first channel to receive the transmission indication, turn off listening on the second channel.

In an illustrative example not claimed, when the first channel and the second channel are a same channel, and the first frame is data, duration for transmitting the first frame on the second channel is less than or equal to specified duration.

Optionally, before the receiving module 501 receives, on the first channel, the transmission indication from the AP,
the listening module 502 is further configured for the STA to perform listening on a third channel, to receive a second frame from the AP, where the second frame includes an indication of the first channel, the indication of the first channel includes characteristic information of the first channel, and the characteristic information of the first channel includes at least one of frequency of the first channel, bandwidth of the first channel, a sending time, a modulation scheme, a frame format, a protocol version, or a time period of the first channel; and
the receiving module 501 is specifically configured to receive, on the first channel based on the characteristic information of the first channel, the transmission indication from the AP.

The first frame may be a trigger frame, the trigger frame includes an uplink transmission parameter, and after the listening module 502 performs listening on the second channel according to the transmission indication, to receive the first frame from the AP, the station further includes:
a transmission module 503, configured to perform uplink transmission based on the uplink transmission parameter, where the uplink transmission parameter includes at least one of a frequency, a bandwidth, a subchannel, a subcarrier, a time, a modulation and coding scheme, a MIMO spatial stream, or pilot resource information.

Optionally, before the receiving module 501 receives, on the first channel, the transmission indication from the AP,
the listening module 502 is further configured to perform listening on the second channel, to receive a third frame from the AP; and
the station further includes:
   a sending module 504, configured to send a fourth frame to the AP on the second channel corresponding to the third frame, where the fourth frame includes a sending mode for sending the transmission indication, and the sending mode of the transmission indication is used by the AP to send the transmission indication, where
   the sending mode of the transmission indication includes: sending the transmission indication on the first channel and/or sending the transmission indication on the second channel.

Optionally, the first frame includes transmission information of a fifth frame, the transmission information of the fifth frame includes at least one of a channel frequency, a channel bandwidth, spatial stream information, or a transmission time, and after the listening module 502 performs listening on the second channel according to the transmission indication, to receive the first frame from the AP,
the listening module 502 is further configured to perform listening on the second channel based on the transmission information of the fifth frame, to obtain the fifth frame.

The transmission indication may further include a STA ID, a STA group ID, channel frequency information, or a channel number, and the listening module is specifically configured to: when the transmission indication meets a preset condition, perform listening on the second channel according to the transmission indication.

Optionally, before the listening module 502 performs listening on the second channel according to the transmission indication,
the listening module 502 is further configured to perform listening on the second channel, to receive a sixth frame from the AP, where the sixth frame is used to query a channel bandwidth available to the STA; and
the sending module 504 is further configured to send a seventh frame to the AP on the second channel corresponding to the sixth frame, where the seventh frame is used to return the channel bandwidth available to the STA, so that the AP sends the first frame on the channel bandwidth available to the STA.

It should be noted that the modules (the receiving module 501, the listening module 502, the transmission module 503, and the sending module 504) are configured to perform related steps in the foregoing method.

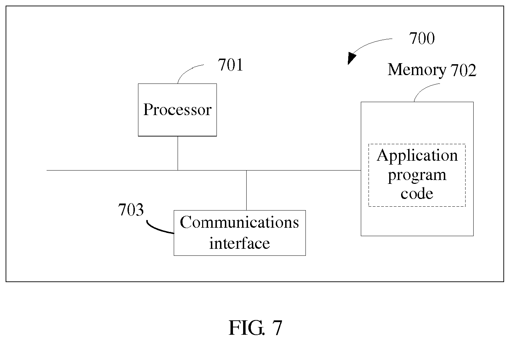

In this aspect, the station 500 is presented in a form of a module. Herein, the "module" may be an application-specific integrated circuit (application-specific integrated circuit, ASIC), a processor that executes one or more pieces of software or firmware programs, a memory, an integrated logic circuit, and/or another component that can provide the foregoing functions. In addition, the receiving module 501, the listening module 502, the transmission module 503, and the sending module 504 may be implemented by a processor 701 of a computer device shown in FIG 7 by using a communications interface 703.

A non-disclosed aspect of the present application further provides an access point (AP) 600. As shown in FIG 6, the AP 600 includes:
a sending module 601, configured to send a transmission indication on a first channel, where the transmission indication is used to indicate that a first frame is transmitted on a second channel, the transmission indication includes transmission information of the first frame, and the transmission information of the first frame includes at least one of a channel frequency, a channel bandwidth, spatial stream information, or a transmission time; and
the sending module 601 is further configured to send the first frame on the second channel according to the transmission indication.

In an illustrative example not claimed, when the first channel and the second channel are a same channel, and the first frame is data, duration for transmitting the first frame on the second channel is less than or equal to specified duration.

Optionally, before the sending module 601 sends the transmission indication on the first channel,
the sending module 601 is further configured to send a second frame on a third channel, where the second frame includes an indication of the first channel, the indication of the first channel includes characteristic information of the first channel, and the characteristic information of the first channel includes at least one of frequency of the first channel, bandwidth of the first channel, a sending time, a modulation scheme, a frame format, a protocol version, or a time period of the first channel; and
the sending module 601 is specifically configured to send the transmission indication on the first channel based on the characteristic information of the first channel.

The first frame may be a trigger frame, the trigger frame includes an uplink transmission parameter, and the uplink transmission parameter is used to instruct the STA to perform uplink transmission based on the uplink transmission parameter. The uplink transmission parameter includes at least one of a frequency, a bandwidth, a subchannel, a subcarrier, a time, a modulation and coding scheme, a MIMO spatial stream, and pilot resource information.

Optionally, before the sending module 601 sends the transmission indication on the first channel,
the sending module 601 is further configured to send a third frame on the second channel; and
the access point further includes:
   a receiving module 602, configured to receive a fourth frame from the STA on the second channel corresponding to the third frame, where the fourth frame includes a sending mode for sending the transmission indication, and the sending mode of the transmission indication includes: sending the transmission indication on the first channel and/or sending the transmission indication on the second channel, where
   the sending module 601 is specifically configured to send the transmission indication on the first channel based on the sending mode of the transmission indication.

Optionally, the first frame includes transmission information of a fifth frame, the transmission information of the fifth frame includes at least one of a channel frequency, a channel bandwidth, spatial stream information, or a transmission time, and after the sending module 601 sends the first frame on the second channel according to the transmission indication,
the sending module 601 is further configured to send the fifth frame on the second channel based on the transmission information of the fifth frame.

Optionally, before the sending module 601 sends the first frame on the second channel according to the transmission indication,
the sending module 601 is further configured to send a sixth frame on the second channel, where the sixth frame is used to query a channel bandwidth available to the STA;
the receiving module 602 is further configured to receive a seventh frame from the STA to the AP on the second channel corresponding to the sixth frame, where the seventh frame is used to return the channel bandwidth available to the STA; and
the sending module 601 is specifically configured to send, according to the transmission indication, the first frame on the channel bandwidth available to the STA.

In an illustrative example not claimed, the first channel and the second channel are a same channel, and the access point further includes:
a restriction module 603, configured to: when the AP detects, on a channel used by the AP, a frame from another AP, restrict a type of a frame that is sent on the channel used by the AP.

That duration for transmitting the first frame on the second channel is less than or equal to specified duration includes: Duration for occupying the second channel by the first frame in a single physical transmission is less than or equal to first specified duration, and duration for occupying the second channel by the first frame in a single transmission is less than or equal to second specified duration. The second specified duration is greater than the first specified duration.

A first frequency sub-band of the channel used by the AP and a second frequency sub-band of a channel used by the another AP may belong to a same frequency band range.

It should be noted that the modules (the sending module 601, the receiving module 602, and the restriction module 603) are configured to perform related steps in the foregoing method.

In this aspect, the access point 600 is presented in a form of a module. Herein, the "module" may be an application-specific integrated circuit (application-specific integrated circuit, ASIC), a processor that executes one or more pieces of software or firmware programs, a memory, an integrated logic circuit, and/or another component that can provide the foregoing functions. In addition, the restriction module 603 may be implemented by a processor 701 of a computer device shown in FIG 7, and the sending module 601 and the receiving module 602 may be implemented by a communications interface 703 of the computer device shown in FIG 7.

As shown in FIG 7, the station 500 and the access point 600 may be implemented by using a structure in FIG 7. The computer device 700 includes at least one processor 701, at least one memory 702, and at least one communications interface 703. The processor 701, the memory 702, and the communications interface 703 are connected and communicate with each other by using the communications bus.

The processor 701 may be a general purpose central processing unit (CPU), a microprocessor, an application-specific integrated circuit (application-specific integrated circuit, ASIC), or one or more integrated circuits for controlling execution of the foregoing solution program.

The communications interface 703 is configured to communicate with another device or communications network, such as the Ethernet, a radio access network (RAN), or a wireless local area network (Wireless Local Area Network, WLAN).

The memory 702 may be a read-only memory (read-only memory, ROM) or another type of static storage device that may store static information and instructions, or a random access memory (random access memory, RAM) or another type of dynamic storage device that may store information and instructions, or may be an electrically erasable programmable read-only memory (Electrically Erasable Programmable Read-Only Memory, EEPROM), a compact disc read-only memory (Compact Disc Read-Only Memory, CD-ROM), another optical disc storage medium, optical disc storage medium (including a compact disc, a laser disc, an optical disc, a digital versatile disc, a Blu-ray disc, or the like), or magnetic disk storage medium, another magnetic storage device, or any other medium that can be used to carry or store expected program code in a form of an instruction or a data structure and that can be accessed by a computer. This does not constitute a limitation herein. The memory may exist independently, and is connected to the processor by using the bus. The memory may alternatively be integrated with the processor.

The memory 702 is configured to store application program code for executing the foregoing solution, and the processor 701 controls the execution. The processor 701 is configured to execute the application program code stored in the memory 702.

When the computer device shown in FIG 7 is a station, the code stored in the memory 702 may be used to execute the foregoing data transmission method executed by the station, for example, receive, on a first channel, a transmission indication from an access point (AP), where the transmission indication is used to indicate that a first frame is transmitted on a second channel, the transmission indication includes transmission information of the first frame, and the transmission information of the first frame includes at least one of a channel frequency, a channel bandwidth, spatial stream information, or a transmission time; and perform listening on the second channel according to the transmission indication, to receive the first frame from the AP.

When the computer device shown in FIG 7 is an access point, the code stored in the memory 702 may be used to execute the foregoing data transmission method executed by the access point, for example, send a transmission indication on a first channel, where the transmission indication is used to indicate that a first frame is transmitted on a second channel, the transmission indication includes transmission information of the first frame, and the transmission information of the first frame includes at least one of a channel frequency, a channel bandwidth, spatial stream information, or a transmission time; and send the first frame on the second channel according to the transmission indication.

An aspect of the present application further provides a computer storage medium, where the computer storage medium may store a program, and when the program is executed, some or all of the steps of any data transmission method described in the foregoing method aspects are performed.

It should be noted that, to make the description brief, the foregoing method aspects are expressed as a series of actions.

In the foregoing aspects, the descriptions of the aspects have respective focuses. For a part that is not described in detail in an aspect, reference may be made to related descriptions in other aspects.

In the several aspects provided in this application, it should be understood that the disclosed apparatuses may be implemented in other manners. For example, the described apparatus aspects are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of the aspects.

In addition, functional units in the aspects of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage. Based on such an understanding, the technical solutions of the present application essentially, or the part contributing to the prior art, or all or a part of the technical solutions may be implemented in a form of a software product. The software product is stored in a storage and includes several instructions for instructing a computer device (which may be a personal computer, a server, a network device, or the like) to perform all or some of the steps of the methods described in the aspects of the present application. The storage includes any medium that can store program code, such as a USB flash drive, a read-only memory (ROM, Read-Only Memory), a random access memory (RAM, Random Access Memory), a removable hard disk, a magnetic disk, or an optical disc.

A person of ordinary skill in the art may understand that all or some of the steps of the methods in the aspects may be implemented by a program instructing relevant hardware. The program may be stored in a computer readable storage. The storage may include a flash memory, a read-only memory (English: Read-Only Memory, ROM for short), a random access memory (English: Random Access Memory, RAM for short), a magnetic disk, or an optical disc.

The principle and implementations of the present application are described herein through specific examples. The description about the aspects of the present application is merely provided to help understand the method and core ideas of the present application. The intended scope of protection is defined by the appended claims.

## Claims

1. A data transmission method, comprising:
receiving (203), by a station, STA, on a first channel, a transmission indication sent by an access point, AP, wherein the transmission indication is used to indicate that a first frame is transmitted on a second channel, the transmission indication comprises transmission information of the first frame, and the transmission information of the first frame comprises at least one of a channel frequency, a channel bandwidth, spatial stream information, and a transmission time; and
performing (204), by the STA, listening on the second channel according to indication content of the transmission indication, to receive the first frame sent by the AP,
wherein the first channel and the second channel are different channels and **characterised by** the method further comprising when performing listening on the first channel to receive the transmission indication, turning off, by the STA, listening on the second channel.

2. The method according to claim 1, wherein before the receiving, by a STA on a first channel, a transmission indication sent by an AP, the method further comprises:
performing, by the STA, listening on a third channel, to receive a second frame sent by the AP, wherein the second frame comprises an indication of the first channel, the indication of the first channel comprises characteristic information of the first channel, and the characteristic information of the first channel comprises at least one of frequency information, bandwidth information, a sending time, a modulation scheme, a frame format, a protocol version, and a time period of the first channel; and
the receiving, by a STA on a first channel, a transmission indication sent by an AP comprises: receiving, by the STA on the first channel based on the characteristic information of the first channel, the transmission indication sent by the AP.

3. The method according to claim 1 or 2, wherein before the receiving, by a STA on a first channel, a transmission indication sent by an AP, the method further comprises:
performing, by the STA, listening on the second channel, to receive a third frame sent by the AP; and
sending, by the STA, a fourth frame to the AP on the second channel in response to the third frame, wherein the fourth frame comprises a sending mode for sending the transmission indication, and the sending mode of the transmission indication is used by the AP to send the transmission indication, wherein
the sending mode of the transmission indication comprises: sending the transmission indication on the first channel and/or sending the transmission indication on the second channel.

4. The method according to any one of claims 1 to 3, wherein the first frame comprises transmission information of a fifth frame, the transmission information of the fifth frame comprises at least one of a channel frequency, a channel bandwidth, spatial stream information, and a transmission time, and after the performing, by the STA, listening on the second channel according to indication content of the transmission indication, to receive the first frame sent by the AP, the method further comprises:
performing, by the STA, listening on the second channel based on the transmission information of the fifth frame, to obtain the fifth frame.

5. The method according to any one of claims 1 to 4, wherein the transmission indication further comprises a STA ID, a STA group ID, channel frequency information, or a channel number, and the performing, by the STA, listening on the second channel according to indication content of the transmission indication comprises: when the indication content of the transmission indication meets a preset condition, performing, by the STA, listening on the second channel according to the transmission indication; and
wherein before the performing, by the STA, listening on the second channel according to indication content of the transmission indication, the method further comprises:
performing, by the STA, listening on the second channel, to receive a sixth frame sent by the AP, wherein the sixth frame is used to query a channel bandwidth available to the STA; and
sending, by the STA, a seventh frame to the AP on the second channel in response to the sixth frame, wherein the seventh frame is used to return the channel bandwidth available to the STA, so that the AP sends the first frame on the channel bandwidth available to the STA.

6. A station, comprising a receiving module (501) and a listening module (502), wherein
the receiving module is configured to: receive a transmission indication from an access point, AP, wherein the transmission indication is used to indicate that a first frame is transmitted on a second channel, the transmission indication comprises transmission information of the first frame, and the transmission information of the first frame comprises at least one of a channel frequency, a channel bandwidth, spatial stream information, or a transmission time; and
the listening module is configured to perform listening on the second channel according to the transmission indication, to receive the first frame from the AP;
wherein the first channel and the second channel are different channels and **characterised by** the listening module being further configured to, when performing listening on the first channel to receive the transmission indication, turn off listening on the second channel.

7. The station according to claim 6, wherein before the receiving module receives, on a first channel, the transmission indication from the AP,
the listening module is further configured to perform listening on a third channel, to receive a second frame from the AP, wherein the second frame comprises an indication of the first channel, the indication of the first channel comprises characteristic information of the first channel, and the characteristic information of the first channel comprises at least one of frequency of the first channel, bandwidth of the first channel, a sending time, a modulation scheme, a frame format, a protocol version, or a time period of the first channel; and
the receiving module is specifically configured to receive, on the first channel based on the characteristic information of the first channel, the transmission indication sent by the AP.

8. The station according to claim 6 or 7, wherein before the receiving module receives, on the first channel, the transmission indication from the AP,
the listening module is further configured to: perform listening on the second channel, to receive a third frame from the AP; and
the station further includes a sending module, the sending module is configured to send a fourth frame to the AP on the second channel in response to the third frame, wherein the fourth frame comprises a sending mode for sending the transmission indication, the sending mode of the transmission indication is used by the AP to send the transmission indication, and the sending mode of the transmission indication comprises: sending the transmission indication on the first channel and/or sending the transmission indication on the second channel.

9. The station according to any one of claims 6 to 8, wherein the first frame comprises transmission information of a fifth frame, the transmission information of the fifth frame comprises at least one of a channel frequency, a channel bandwidth, spatial stream information, and a transmission time, and after the processor performs listening on the second channel according to the indication content of the transmission indication by using the communications interface, to receive the first frame sent by the AP,
the listening module is further configured to perform listening on the second channel based on the transmission information of the fifth frame by using the communications interface, to obtain the fifth frame.

10. The station according to any one of claims 6 to 9, wherein the transmission indication further comprises a STA ID, a STA group ID, channel frequency information, or a channel number, and the processor is specifically configured to:
when the indication content of the transmission indication meets a preset condition, perform listening on the second channel according to the transmission indication by using the communications interface; and
wherein before the processor performs listening on the second channel according to the indication content of the transmission indication by using the communications interface,
the processor is further configured to: perform listening on the second channel by using the communications interface, to receive a sixth frame sent by the AP, wherein the sixth frame is used to query a channel bandwidth available to the STA; and send a seventh frame to the AP on the second channel in response to the sixth frame, wherein the seventh frame is used to return the channel bandwidth available to the STA, so that the AP sends the first frame on the channel bandwidth available to the STA.

11. A communications system comprising at least one station, STA, according to any one of claims 6 to 10 and an access point, the access point comprising a sending module (601), wherein the sending module is configured to:
send a transmission indication on a first channel to the STA, wherein the transmission indication is used to indicate that a first frame is transmitted on a second channel, the transmission indication comprises transmission information of the first frame, and the transmission information of the first frame comprises at least one of a channel frequency, a channel bandwidth, spatial stream information, or a transmission time; and
send the first frame on the second channel according to the transmission indication to the STA.

12. The system according to claim 11, wherein the first channel and the second channel are different channels;
wherein before the sending module sends the transmission indication on the first channel,
the sending module is further configured to send a second frame on a third channel, wherein the second frame comprises an indication of the first channel, the indication of the first channel comprises characteristic information of the first channel, and the characteristic information of the first channel comprises at least one of frequency of the first channel, bandwidth of the first channel, a sending time, a modulation scheme, a frame format, a protocol version, or a time period of the first channel; and
the sending module is specifically configured to send the transmission indication on the first channel based on the characteristic information of the first channel.

13. The system according to claim 11 or 12, wherein before the sending module sends the transmission indication on the first channel,
the sending module is further configured to: send a third frame on the second channel; and
the access point further includes a receiving module (602), the receiving module is configured to receive a fourth frame from the STA on the second channel in response to the third frame, wherein the fourth frame comprises a sending mode for sending the transmission indication, and the sending mode of the transmission indication comprises: sending the transmission indication on the first channel and/or sending the transmission indication on the second channel; and
the sending module is specifically configured to send the transmission indication on the first channel based on the sending mode of the transmission indication.

14. The system according to any one of claims 11 to 13, wherein the first frame comprises transmission information of a fifth frame, the transmission information of the fifth frame comprises at least one of a channel frequency, a channel bandwidth, spatial stream information, and a transmission time, and after the processor sends the first frame on the second channel according to the indication content of the transmission indication by using the communications interface,
the sending module is further configured to send the fifth frame on the second channel based on the transmission information of the fifth frame by using the communications interface.

15. The system according to any one of claims 11 to 13, wherein before the sending module sends the first frame on the second channel according to the transmission indication,
the sending module is further configured to: send a sixth frame on the second channel, wherein the sixth frame is used to query a channel bandwidth available to the STA; and
the receiving module is configured to receive a seventh frame from the STA to the AP on the second channel corresponding to the sixth frame, wherein the seventh frame is used to return the channel bandwidth available to the STA; and
the sending module is specifically configured to send, according to the transmission indication, the first frame on the channel bandwidth available to the STA.

## Patentansprüche

1. Datenübertragungsverfahren, das Folgendes umfasst:
Empfangen (203), durch eine Station, STA, auf einem ersten Kanal einer Übertragungsanzeige, die durch einen Zugangspunkt, AP, gesendet wird, wobei die Übertragungsanzeige verwendet wird, um anzuzeigen, dass ein erster Rahmen auf einem zweiten Kanal übertragen wird, wobei die Übertragungsanzeige Übertragungsinformationen des ersten Rahmens umfasst, und die Übertragungsinformationen des ersten Rahmens mindestens eines von einer Kanalfrequenz, einer Kanalbandbreite, räumlichen Strominformationen und einer Übertragungszeit umfassen; und
Durchführen (204), durch die STA, eines Abhörens auf dem zweiten Kanal gemäß dem Anzeigeinhalt der Übertragungsanzeige, um den ersten Rahmen, der durch den AP gesendet wird, zu empfangen,
wobei der erste Kanal und der zweite Kanal unterschiedliche Kanäle sind und **dadurch gekennzeichnet, dass** das Verfahren, wenn das Abhören auf dem ersten Kanal durchgeführt wird, um die Übertragungsanzeige zu empfangen, ferner ein Ausschalten, durch die STA, des Abhörens auf dem zweiten Kanal umfasst.

2. Verfahren nach Anspruch 1, wobei vor dem Empfangen, durch eine STA auf einem ersten Kanal, einer Übertragungsanzeige, die durch den AP gesendet wird, das Verfahren ferner Folgendes umfasst:
Durchführen, durch die STA, des Abhören auf einem dritten Kanal, um einen zweiten Rahmen, der durch den AP gesendet wird, zu empfangen, wobei der zweite Rahmen eine Anzeige des ersten Kanals umfasst, die Anzeige des ersten Kanals charakteristische Informationen des ersten Kanals umfasst, und die charakteristischen Informationen des ersten Kanals mindestens eines von Frequenzinformationen, Bandbreiteninformationen, einer Sendezeit, einem Modulationsschema, einem Rahmenformat, einer Protokollversion und einem Zeitraum des ersten Kanals umfassen; und
das Empfangen, durch eine STA auf einem ersten Kanal, einer Übertragungsanzeige, die durch einen AP gesendet wird, Folgendes umfasst: Empfangen, durch die STA auf dem ersten Kanal, basierend auf den charakteristischen Informationen des ersten Kanals, der Übertragungsanzeige, die durch den AP gesendet wird.

3. Verfahren nach Anspruch 1 oder 2, wobei vor dem Empfangen, durch eine STA auf einem ersten Kanal, einer Übertragungsanzeige, die durch einen AP gesendet wird, das Verfahren ferner Folgendes umfasst:
Durchführen, durch die STA, des Abhörens auf dem zweiten Kanal, um einen dritten Rahmen, der durch den AP gesendet wird, zu empfangen; und
Senden, durch die STA, eines vierten Rahmens an den AP auf dem zweiten Kanal als Reaktion auf den dritten Rahmen, wobei der vierte Rahmen einen Sendemodus zum Senden der Übertragungsanzeige umfasst und der Sendemodus der Übertragungsanzeige durch den AP verwendet wird, um die Übertragungsanzeige zu senden, wobei
der Sendemodus der Übertragungsanzeige Folgendes umfasst: Senden der Übertragungsanzeige auf dem ersten Kanal und/oder Senden der Übertragungsanzeige auf dem zweiten Kanal.

4. Verfahren nach einem der Ansprüche 1 bis 3, wobei der erste Rahmen Übertragungsinformationen eines fünften Rahmens umfasst, wobei die Übertragungsinformationen des fünften Rahmens mindestens eines von einer Kanalfrequenz, einer Kanalbandbreite, räumlichen Strominformationen und einer Übertragungszeit umfassen, und nach dem Durchführen, durch die STA, des Abhörens auf dem zweiten Kanal gemäß dem Anzeigeinhalt der Übertragungsanzeige, um den ersten Rahmen, der durch den AP gesendet wird, zu empfangen, das Verfahren ferner Folgendes umfasst:
Durchführen, durch die STA, des Abhörens auf dem zweiten Kanal basierend auf den Übertragungsinformationen des fünften Rahmens, um den fünften Rahmen zu erhalten.

5. Verfahren nach einem der Ansprüche 1 bis 4, wobei die Übertragungsanzeige ferner eine STA-ID, eine STA-Gruppen-ID, Kanalfrequenzinformationen oder eine Kanalnummer umfasst, und das Durchführen, durch die STA, des Abhörens auf dem zweiten Kanal gemäß des Anzeigeinhalts der Übertragungsanzeige Folgendes umfasst: wenn der Anzeigeinhalt der Übertragungsanzeige eine voreingestellte Bedingung erfüllt, Durchführen, durch die STA, des Abhörens auf dem zweiten Kanal gemäß der Übertragungsanzeige; und
wobei vor dem Durchführen, durch die STA, des Abhörens auf dem zweiten Kanal gemäß dem Anzeigeinhalt der Übertragungsanzeige das Verfahren ferner Folgendes umfasst:
Durchführen, durch die STA, des Abhörens auf dem zweiten Kanal, um einen sechsten Rahmen, der durch den AP gesendet wird, zu empfangen, wobei der sechste Rahmen verwendet wird, um eine Kanalbandbreite, die für die STA verfügbar ist, abzufragen; und
Senden, durch die STA, eines siebten Rahmens an den AP auf dem zweiten Kanal als Reaktion auf den sechsten Rahmen, wobei der siebte Rahmen verwendet wird, um die Kanalbandbreite, die für die STA verfügbar ist, zurückzugeben, so dass der AP den ersten Rahmen auf der Kanalbandbreite, die für die STA verfügbar ist, sendet.

6. Station, die ein Empfangsmodul (501) und ein Abhörmodul (502) umfasst, wobei das Empfangsmodul konfiguriert ist zum: Empfangen einer Übertragungsanzeige von einem Zugangspunkt, AP, wobei die Übertragungsanzeige verwendet wird, um anzuzeigen, dass ein erster Rahmen auf einem zweiten Kanal übertragen wird, wobei die Übertragungsanzeige Übertragungsinformationen des ersten Rahmens umfasst, und die Übertragungsinformationen des ersten Rahmens mindestens eines von einer Kanalfrequenz, einer Kanalbandbreite, räumlichen Strominformationen oder einer Übertragungszeit umfassen; und
das Abhörmodul konfiguriert ist, um das Abhören auf dem zweiten Kanal gemäß der Übertragungsanzeige durchzuführen, um den ersten Rahmen von dem AP zu empfangen;
wobei der erste Kanal und der zweite Kanal unterschiedliche Kanäle sind und **dadurch gekennzeichnet, dass** das Abhörmodul ferner konfiguriert ist, um, wenn das Abhören auf dem ersten Kanal durchgeführt wird, um die Übertragungsanzeige zu empfangen, das Abhören auf dem zweiten Kanal auszuschalten.

7. Station nach Anspruch 6, wobei, bevor das Empfangsmodul auf einem ersten Kanal die Übertragungsanzeige von dem AP empfängt,
das Abhörmodul ferner konfiguriert ist, um das Abhören auf einem dritten Kanal durchzuführen, um einen zweiten Rahmen von dem AP zu empfangen, wobei der zweite Rahmen eine Anzeige des ersten Kanals umfasst, die Anzeige des ersten Kanals charakteristische Informationen des ersten Kanals umfasst, und die charakteristischen Informationen des ersten Kanals mindestens eines von einer Frequenz des ersten Kanals, einer Bandbreite des ersten Kanals, einer Sendezeit, einem Modulationsschema, einem Rahmenformat, einer Protokollversion oder einem Zeitraum des ersten Kanals umfassen; und
das Empfangsmodul speziell konfiguriert ist, um auf dem ersten Kanal basierend auf den charakteristischen Informationen des ersten Kanals, die Übertragungsanzeige, die durch den AP gesendet wird, zu empfangen.

8. Station nach Anspruch 6 oder 7, wobei, bevor das Empfangsmodul auf dem ersten Kanal die Übertragungsanzeige von dem AP empfängt,
das Abhörmodul ferner konfiguriert ist zum: Durchführen des Abhörens auf dem zweiten Kanal, um einen dritten Rahmen von dem AP zu empfangen; und
die Station ferner ein Sendemodul einschließt, wobei das Sendemodul konfiguriert ist, um als Reaktion auf den dritten Rahmen einen vierten Rahmen an den AP auf dem zweiten Kanal zu senden, wobei der vierte Rahmen einen Sendemodus zum Senden der Übertragungsanzeige umfasst, der Sendemodus von die Übertragungsanzeige durch den AP verwendet wird, um die Übertragungsanzeige zu senden, und der Sendemodus der Übertragungsanzeige Folgendes umfasst: Senden der Übertragungsanzeige auf dem ersten Kanal und/oder Senden der Übertragungsanzeige auf dem zweiten Kanal.

9. Station nach einem der Ansprüche 6 bis 8, wobei der erste Rahmen Übertragungsinformationen eines fünften Rahmens umfasst, die Übertragungsinformationen des fünften Rahmens mindestens eines von einer Kanalfrequenz, einer Kanalbandbreite, räumlichen Strominformationen und einer Übertragungszeit umfassen und nachdem der Prozessor das Abhören auf dem zweiten Kanal gemäß dem Anzeigeinhalt der Übertragungsanzeige durch Verwenden der Kommunikationsschnittstelle durchgeführt hat, um den ersten Rahmen, der durch den AP gesendet wird, zu empfangen,
das Abhörmodul ferner konfiguriert ist, um das Abhören auf dem zweiten Kanal basierend auf den Übertragungsinformationen des fünften Rahmens durch Verwenden der Kommunikationsschnittstelle durchzuführen, um den fünften Rahmen zu erhalten.

10. Station nach einem der Ansprüche 6 bis 9, wobei die Übertragungsanzeige ferner eine STA-ID, eine STA-Gruppen-ID, Kanalfrequenzinformationen oder eine Kanalnummer umfasst, und wobei der Prozessor speziell konfiguriert ist zum:
wenn der Anzeigeinhalt der Übertragungsanzeige eine voreingestellte Bedingung erfüllt, Durchführen des Abhörens auf dem zweiten Kanal gemäß der Übertragungsanzeige durch Verwenden der Kommunikationsschnittstelle; und
wobei, bevor der Prozessor das Abhören auf dem zweiten Kanal gemäß dem Anzeigeinhalt der Übertragungsanzeige durch Verwenden der Kommunikationsschnittstelle durchführt,
der Prozessor ferner konfiguriert ist zum: Durchführen des Abhörens auf dem zweiten Kanal durch Verwenden der Kommunikationsschnittstelle, um einen sechsten Rahmen, der durch den AP gesendet wird, zu empfangen, wobei der sechste Rahmen verwendet wird, um eine Kanalbandbreite, die für die STA verfügbar ist, abzufragen;
und Senden eines siebten Rahmens an den AP auf dem zweiten Kanal als Reaktion auf den sechsten Rahmen, wobei der siebte Rahmen verwendet wird, um die Kanalbandbreite, die für die STA verfügbar ist, zurückzugeben, so dass der AP den ersten Rahmen auf der Kanalbandbreite, die für die STA verfügbar ist, sendet.

11. Kommunikationssystem, das mindestens eine Station, STA, nach einem der Ansprüche 6 bis 10 und einen Zugangspunkt umfasst, wobei der Zugangspunkt ein Sendemodul (601) umfasst, wobei das Sendemodul konfiguriert ist zum:
Senden einer Übertragungsanzeige auf einem ersten Kanal an die STA, wobei die Übertragungsanzeige verwendet wird, um anzuzeigen, dass ein erster Rahmen auf einem zweiten Kanal übertragen wird, die Übertragungsanzeige Übertragungsinformationen des ersten Rahmens umfasst, und die Übertragungsinformationen des ersten Rahmens mindestens eines von einer Kanalfrequenz, einer Kanalbandbreite, räumlichen Strominformationen oder einer Übertragungszeit umfassen; und
Senden des ersten Rahmens auf dem zweiten Kanal gemäß der Übertragungsanzeige an die STA.

12. System nach Anspruch 11, wobei der erste Kanal und der zweite Kanal unterschiedliche Kanäle sind;
wobei, bevor das Sendemodul die Übertragungsanzeige auf dem ersten Kanal sendet, das Sendemodul ferner konfiguriert ist, um einen zweiten Rahmen auf einem dritten Kanal zu senden, wobei der zweite Rahmen eine Anzeige des ersten Kanals umfasst, die Anzeige des ersten Kanals charakteristische Informationen des ersten Kanals umfasst, und die charakteristischen Informationen des ersten Kanals mindestens eines von einer Frequenz des ersten Kanals, einer Bandbreite des ersten Kanals, einer Sendezeit, einem Modulationsschema, einem Rahmenformat, einer Protokollversion oder einem Zeitraum des ersten Kanals umfassen; und
das Sendemodul speziell konfiguriert ist, um die Übertragungsanzeige auf dem ersten Kanal basierend auf den charakteristischen Informationen des ersten Kanals zu senden.

13. System nach Anspruch 11 oder 12, wobei, bevor das Sendemodul die Übertragungsanzeige auf dem ersten Kanal sendet,
das Sendemodul ferner konfiguriert ist zum: Senden eines dritten Rahmens auf dem zweiten Kanal; und
der Zugangspunkt ferner ein Empfangsmodul (602) einschließt, wobei das Empfangsmodul konfiguriert ist, um als Reaktion auf den dritten Rahmen einen vierten Rahmen von der STA auf dem zweiten Kanal zu empfangen, wobei der vierte Rahmen einen Sendemodus zum Senden der Übertragungsanzeige umfasst, und der Sendemodus der Übertragungsanzeige Folgendes umfasst: Senden der Übertragungsanzeige auf dem ersten Kanal und/oder Senden der Übertragungsanzeige auf dem zweiten Kanal; und
das Sendemodul speziell konfiguriert ist, um die Übertragungsanzeige auf dem ersten Kanal basierend auf dem Sendemodus der Übertragungsanzeige zu senden.

14. System nach einem der Ansprüche 11 bis 13, wobei der erste Rahmen Übertragungsinformationen eines fünften Rahmens umfasst, die Übertragungsinformationen des fünften Rahmens mindestens eines von einer Kanalfrequenz, einer Kanalbandbreite, räumlichen Strominformationen und einer Übertragungszeit umfassen und nachdem der Prozessor den ersten Rahmen auf dem zweiten Kanal gemäß dem Anzeigeinhalt der Übertragungsanzeige durch Verwenden der Kommunikationsschnittstelle gesendet hat,
das Sendemodul ferner konfiguriert ist, um den fünften Rahmen auf dem zweiten Kanal basierend auf den Übertragungsinformationen des fünften Rahmens durch Verwenden der Kommunikationsschnittstelle zu senden.

15. System nach einem der Ansprüche 11 bis 13, wobei, bevor das Sendemodul den ersten Rahmen auf dem zweiten Kanal gemäß der Übertragungsanzeige sendet, das Sendemodul ferner konfiguriert ist zum: Senden eines sechsten Rahmens auf dem zweiten Kanal, wobei der sechste Rahmen verwendet wird, um eine Kanalbandbreite, die für die STA verfügbar ist, abzufragen; und
das Empfangsmodul konfiguriert ist, um einen siebten Rahmen von der STA an den AP auf dem zweiten Kanal, der dem sechsten Rahmen entspricht, zu empfangen, wobei der siebte Rahmen verwendet wird, um die Kanalbandbreite, die für die STA verfügbar ist, zurückzugeben; und
das Sendemodul speziell konfiguriert ist, um gemäß der Übertragungsanzeige den ersten Rahmen auf der Kanalbandbreite, die für die STA verfügbar ist, zu senden.

## Revendications

1. Procédé de transmission de données, comprenant :
la réception (203), par une station, STA, sur un premier canal, d'une indication de transmission envoyée par un point d'accès, AP, dans lequel l'indication de transmission est utilisée pour indiquer qu'une première trame est transmise sur un deuxième canal, l'indication de transmission comprend des informations de transmission de la première trame, et les informations de transmission de la première trame comprennent au moins l'un parmi une fréquence de canal, une largeur de bande de canal, des informations de flux spatial et un moment de transmission ; et
la réalisation (204), par la STA, d'une écoute sur le deuxième canal selon du contenu d'indication de l'indication de transmission, pour recevoir la première trame envoyée par l'AP,
dans lequel le premier canal et le deuxième canal sont des canaux différents et **caractérisé par** le procédé comprenant en outre, lors de la réalisation d'une écoute sur le premier canal pour recevoir l'indication de transmission, la désactivation, par la STA, de l'écoute sur le deuxième canal.

2. Procédé selon la revendication 1, dans lequel, avant la réception, par une STA sur un premier canal, d'une indication de transmission envoyée par un AP, le procédé comprend en outre :
la réalisation, par la STA, d'une écoute sur un troisième canal, pour recevoir une deuxième trame envoyée par l'AP, dans lequel la deuxième trame comprend une indication du premier canal, l'indication du premier canal comprend des informations de caractéristique du premier canal, et les informations de caractéristique du premier canal comprennent au moins l'un parmi des informations de fréquence, des informations de largeur de bande, un moment d'envoi, un schéma de modulation, un format de trame, une version de protocole et une période de temps du premier canal ; et
la réception, par une STA sur un premier canal, d'une indication de transmission envoyée par un AP comprend : la réception, par la STA sur le premier canal sur la base des informations de caractéristique du premier canal, de l'indication de transmission envoyée par l'AP.

3. Procédé selon la revendication 1 ou 2, dans lequel, avant la réception, par une STA sur un premier canal, d'une indication de transmission envoyée par un AP, le procédé comprend en outre :
la réalisation, par la STA, d'une écoute sur le deuxième canal, pour recevoir une troisième trame envoyée par l'AP ; et
l'envoi, par la STA, d'une quatrième trame à l'AP sur le deuxième canal en réponse à la troisième trame, dans lequel la quatrième trame comprend un mode d'envoi pour l'envoi de l'indication de transmission, et le mode d'envoi de l'indication de transmission est utilisé par l'AP pour envoyer l'indication de transmission, dans lequel
le mode d'envoi de l'indication de transmission comprend : l'envoi de l'indication de transmission sur le premier canal et/ou l'envoi de l'indication de transmission sur le deuxième canal.

4. Procédé selon l'une quelconque des revendications 1 à 3, dans lequel la première trame comprend des informations de transmission d'une cinquième trame, les informations de transmission de la cinquième trame comprennent au moins l'un parmi une fréquence de canal, une largeur de bande de canal, des informations de flux spatial et un moment de transmission, et, après la réalisation, par la STA, d'une écoute sur le deuxième canal selon du contenu d'indication de l'indication de transmission, pour recevoir la première trame envoyée par l'AP, le procédé comprend en outre :
la réalisation, par la STA, d'une écoute sur le deuxième canal sur la base des informations de transmission de la cinquième trame, pour obtenir la cinquième trame.

5. Procédé selon l'une quelconque des revendications 1 à 4, dans lequel l'indication de transmission comprend en outre un ID de STA, un ID de groupe de STA, des informations de fréquence de canal ou un numéro de canal, et la réalisation, par la STA, d'une écoute sur le deuxième canal selon du contenu d'indication de l'indication de transmission comprend : lorsque le contenu d'indication de l'indication de transmission satisfait à une condition prédéfinie, la réalisation, par la STA, d'une écoute sur le deuxième canal selon l'indication de transmission ; et
dans lequel, avant la réalisation, par la STA, d'une écoute sur le deuxième canal selon du contenu d'indication de l'indication de transmission, le procédé comprend en outre :
la réalisation, par la STA, d'une écoute sur le deuxième canal, pour recevoir une sixième trame envoyée par l'AP, dans lequel la sixième trame est utilisée pour demander une largeur de bande de canal disponible pour la STA ; et
l'envoi, par la STA, d'une septième trame à l'AP sur le deuxième canal en réponse à la sixième trame, dans lequel la septième trame est utilisée pour renvoyer la largeur de bande de canal disponible pour la STA, de sorte que l'AP envoie la première trame sur la largeur de bande de canal disponible pour la STA.

6. Station, comprenant un module de réception (501) et un module d'écoute (502), dans laquelle
le module de réception est configuré pour : recevoir une indication de transmission en provenance d'un point d'accès, AP, dans laquelle l'indication de transmission est utilisée pour indiquer qu'une première trame est transmise sur un deuxième canal, l'indication de transmission comprend des informations de transmission de la première trame, et les informations de transmission de la première trame comprennent au moins l'un parmi une fréquence de canal, une largeur de bande de canal, des informations de flux spatial ou un moment de transmission ; et
le module d'écoute est configuré pour réaliser une écoute sur le deuxième canal selon l'indication de transmission, pour recevoir la première trame en provenance de l'AP ;
dans laquelle le premier canal et le deuxième canal sont des canaux différents et **caractérisée par** le module d'écoute étant en outre configuré pour, lors de la réalisation d'une écoute sur le premier canal pour recevoir l'indication de transmission, désactiver l'écoute sur le deuxième canal.

7. Station selon la revendication 6, dans laquelle, avant que le module de réception ne reçoive, sur un premier canal, l'indication de transmission en provenance de l'AP,
le module d'écoute est en outre configuré pour réaliser une écoute sur un troisième canal, pour recevoir une deuxième trame en provenance de l'AP, dans laquelle la deuxième trame comprend une indication du premier canal, l'indication du premier canal comprend des informations de caractéristique du premier canal, et les informations de caractéristique du premier canal comprennent au moins l'un parmi une fréquence du premier canal, une largeur de bande du premier canal, un moment d'envoi, un schéma de modulation, un format de trame, une version de protocole ou une période de temps du premier canal ; et
le module de réception est spécifiquement configuré pour recevoir, sur le premier canal sur la base des informations de caractéristique du premier canal, l'indication de transmission envoyée par l'AP.

8. Station selon la revendication 6 ou 7, dans laquelle, avant que le module de réception ne reçoive, sur le premier canal, l'indication de transmission en provenance de l'AP,
le module d'écoute est en outre configuré pour : réaliser une écoute sur le deuxième canal, pour recevoir une troisième trame en provenance de l'AP ; et
la station comporte en outre un module d'envoi, le module d'envoi est configuré pour envoyer une quatrième trame à l'AP sur le deuxième canal en réponse à la troisième trame, dans laquelle la quatrième trame comprend un mode d'envoi pour l'envoi de l'indication de transmission, le mode d'envoi de l'indication de transmission est utilisé par l'AP pour envoyer l'indication de transmission, et le mode d'envoi de l'indication de transmission comprend : l'envoi de l'indication de transmission sur le premier canal et/ou l'envoi de l'indication de transmission sur le deuxième canal.

9. Station selon l'une quelconque des revendications 6 à 8, dans laquelle la première trame comprend des informations de transmission d'une cinquième trame, les informations de transmission de la cinquième trame comprennent au moins l'un parmi une fréquence de canal, une largeur de bande de canal, des informations de flux spatial et un moment de transmission, et après que le processeur a réalisé une écoute sur le deuxième canal selon le contenu d'indication de l'indication de transmission à l'aide de l'interface de communication, pour recevoir la première trame envoyée par l'AP,
le module d'écoute est en outre configuré pour réaliser une écoute sur le deuxième canal sur la base des informations de transmission de la cinquième trame à l'aide de l'interface de communication, pour obtenir la cinquième trame.

10. Station selon l'une quelconque des revendications 6 à 9, dans laquelle l'indication de transmission comprend en outre un ID de STA, un ID de groupe de STA, des informations de fréquence de canal ou un numéro de canal, et le processeur est spécifiquement configuré pour :
lorsque le contenu d'indication de l'indication de transmission satisfait à une condition prédéfinie, réaliser une écoute sur le deuxième canal selon l'indication de transmission à l'aide de l'interface de communication ; et
dans laquelle, avant que le processeur ne réalise une écoute sur le deuxième canal selon le contenu d'indication de l'indication de transmission à l'aide de l'interface de communication,
le processeur est en outre configuré pour : réaliser une écoute sur le deuxième canal à l'aide de l'interface de communication, pour recevoir une sixième trame envoyée par l'AP, dans laquelle la sixième trame est utilisée pour demander une largeur de bande de canal disponible pour la STA ; et envoyer une septième trame à l'AP sur le deuxième canal en réponse à la sixième trame, dans laquelle la septième trame est utilisée pour renvoyer la largeur de bande de canal disponible pour la STA, de sorte que l'AP envoie la première trame sur la largeur de bande de canal disponible pour la STA.

11. Système de communication comprenant au moins une station, STA, selon l'une quelconque des revendications 6 à 10 et un point d'accès, le point d'accès comprenant un module d'envoi (601), dans lequel le module d'envoi est configuré pour :
envoyer une indication de transmission sur un premier canal à la STA, dans lequel l'indication de transmission est utilisée pour indiquer qu'une première trame est transmise sur un deuxième canal, l'indication de transmission comprend des informations de transmission de la première trame, et les informations de transmission de la première trame comprennent au moins l'un parmi une fréquence de canal, une largeur de bande de canal, des informations de flux spatial ou un moment de transmission ; et
envoyer la première trame sur le deuxième canal selon l'indication de transmission à la STA.

12. Système selon la revendication 11, dans lequel le premier canal et le deuxième canal sont des canaux différents ;
dans lequel, avant que le module d'envoi n'envoie l'indication de transmission sur le premier canal,
le module d'envoi est en outre configuré pour envoyer une deuxième trame sur un troisième canal, dans lequel la deuxième trame comprend une indication du premier canal, l'indication du premier canal comprend des informations de caractéristique du premier canal, et les informations de caractéristique du premier canal comprennent au moins l'un parmi une fréquence du premier canal, une largeur de bande du premier canal, un moment d'envoi, un schéma de modulation, un format de trame, une version de protocole ou une période de temps du premier canal ; et
le module d'envoi est spécifiquement configuré pour envoyer l'indication de transmission sur le premier canal sur la base des informations de caractéristique du premier canal.

13. Système selon la revendication 11 ou 12, dans lequel, avant que le module d'envoi n'envoie l'indication de transmission sur le premier canal,
le module d'envoi est en outre configuré pour : envoyer une troisième trame sur le deuxième canal ; et
le point d'accès comporte en outre un module de réception (602), le module de réception est configuré pour recevoir une quatrième trame en provenance de la STA sur le deuxième canal en réponse à la troisième trame, dans lequel la quatrième trame comprend un mode d'envoi pour l'envoi de l'indication de transmission, et le mode d'envoi de l'indication de transmission comprend : l'envoi de l'indication de transmission sur le premier canal et/ou l'envoi de l'indication de transmission sur le deuxième canal ; et
le module d'envoi est spécifiquement configuré pour envoyer l'indication de transmission sur le premier canal sur la base du mode d'envoi de l'indication de transmission.

14. Système selon l'une quelconque des revendications 11 à 13, dans lequel la première trame comprend des informations de transmission d'une cinquième trame, les informations de transmission de la cinquième trame comprennent au moins l'un parmi une fréquence de canal, une largeur de bande de canal, des informations de flux spatial et un moment de transmission, et, après que le processeur envoie la première trame sur le deuxième canal selon le contenu d'indication de l'indication de transmission à l'aide de l'interface de communication,
le module d'envoi est en outre configuré pour envoyer la cinquième trame sur le deuxième canal sur la base des informations de transmission de la cinquième trame à l'aide de l'interface de communication.

15. Système selon l'une quelconque des revendications 11 à 13, dans lequel, avant que le module d'envoi n'envoie la première trame sur le deuxième canal selon l'indication de transmission,
le module d'envoi est en outre configuré pour : envoyer une sixième trame sur le deuxième canal, dans lequel la sixième trame est utilisée pour demander une largeur de bande de canal disponible pour la STA ; et
le module de réception est configuré pour recevoir une septième trame en provenance de la STA à l'AP sur le deuxième canal correspondant à la sixième trame, dans lequel la septième trame est utilisée pour renvoyer la largeur de bande de canal disponible pour la STA ; et
le module d'envoi est spécifiquement configuré pour envoyer, selon l'indication de transmission, la première trame sur la largeur de bande de canal disponible pour la STA.
